# EUROPÄISCHE PATENTSCHRIFT

(11) **EP 3 849 034 B1**
(45) Veröffentlichungstag und Bekanntmachung des Hinweises auf die Patenterteilung: **28.01.2026**
(21) Anmeldenummer: 20212487.1
(22) Anmeldetag: 08.12.2020
(51) Int. Cl.: H02B 3/00, G08B 5/36, G08B 21/02, H02B 7/06, G08B 21/22

(54) **SICHERHEITSANORDNUNG FÜR ZUMINDEST EINE UMSPANNSTATION**
SAFETY ARRANGEMENT FOR AT LEAST ONE TRANSFORMER STATION
AGENCEMENT DE SÉCURITÉ POUR AU MOINS UNE STATION DE TRANSFORMATION

(30) Priorität: 08.01.2020 DE 102020100206
(43) Veröffentlichungstag der Anmeldung: 14.07.2021
(73) Patentinhaber: Westnetz GmbH, 44139 Dortmund (DE)
(72) Erfinder: Jotzo, Lars, 59399 Olfen (DE); Moshi, Wesam, 47877 Willich (DE)
(74) Vertreter: Cohausz & Florack

(56) Entgegenhaltungen:
- EP-A1- 2 919 348
- EP-B1- 2 919 348
- CN-U- 204 927 947
- KR-Y1- 200 470 826
- US-A1- 2019 229 504

## Beschreibung

Die Anmeldung betrifft eine Sicherheitsanordnung für zumindest zwei Schaltschränke einer Umspannstation. Ferner betrifft die Anmeldung eine Umspannstation, ein Sicherheitssystem und ein Verfahren.

Es kommt immer wieder vor, dass in einer (Mittelspannungs-) Umspannstation Arbeiten an einem Schaltschrank einer Mehrzahl von Schaltschränken durchzuführen sind. Grund der Arbeit kann beispielsweise ein Fehler sein oder eine erforderlich Wartung. Aufgrund der hohen Spannungen (z.B. von bis zu 10 kV) und/oder Ströme in einem Schaltschrank sind hohe Sicherheitsvorkehrungen für eine Arbeit an einem Schaltschrank einer Umspannstation vorgegeben.

Insbesondere ist es aus dem Stand der Technik bekannt, dass zunächst der Schaltschrank, an dem Arbeiten durchzuführen sind, spannungslos geschaltet wird. Zudem werden die weiteren und noch unter Spannung stehenden Schaltschränke der Umspannstation entsprechend kenntlich gemacht, indem der Monteur manuell eine Sicherheitskette aufhängt. Sicherheitsketten werden beim Stand der Technik beidseitig an dem mindestens einen benachbarten Schaltschrank unter Nutzung von Magnethaltern aufgehangen. Nach Abschluss der Arbeiten wird die mindestens eine Sicherheitskette wird abgenommen.

Nachteilig an dem Stand der Technik ist, dass Fehler bei der manuellen Anbringung der Sicherheitskette nicht ausgeschlossen werden können. Eine fehlerhafte Anbringung einer Sicherheitskette kann insbesondere für einen Monteur fatale Folgen haben. Zudem ist die beschriebene Anbringung einer Sicherheitskette mit einem erheblichen Aufwand verbunden.

Beispiele bekannter Sicherheitsanordnungen sind in US2019229504A1, EP2919348A1, CN204927947U und KR200470826Y1 offenbart.

Daher liegt der Anmeldung die Aufgabe zugrunde, eine Möglichkeit bereitzustellen, welche die Sicherheit bei Arbeiten an einem Schaltschrank einer (Mittelspannungs-) Umspannstation erhöht und insbesondere gleichzeitig den Aufwand reduziert.

Die Aufgabe wird gemäß einem ersten Aspekt der Anmeldung gelöst durch eine Sicherheitsanordnung für zumindest zwei Schaltschränke einer Umspannstation nach Anspruch 1.

Im Gegensatz zum Stand der Technik wird anmeldungsgemäß die Sicherheit bei Arbeiten an einem Schaltschrank einer (Mittelspannungs-) Umspannstation erhöht und insbesondere gleichzeitig der Aufwand reduziert, indem eine (digitale) Sicherheitsanordnung breitgestellt wird, welche die jeweiligen Anlagenzuständen (automatisch) aus einer jeweiligen Mehrzahl von elektrischen Zustandsparametern der entsprechenden Schaltschränke bestimmt und anschließend die jeweils bestimmten (augenblicklichen) Anlagenzustände an den jeweiligen Schaltschränken (unmittelbar) anzeigt. Ein manuelles Aufhängen von Sicherheitsketten kann entfallen. Dementsprechend wird das Risiko einer fehlerhaften Anbringung einer Sicherheitskette durch einen Monteur minimiert und zudem der Aufwand signifikant reduziert.

Die anmeldungsgemäße Sicherheitsanordnung dient der Überwachung von Schaltschränken einer Umspannstation. Die Umspannstation ist insbesondere eine Mittelspannungs- oder Hochspannungs-Umspannstation. Die Umspannstation kann ein Gebäude umfassen, in dem zumindest zwei (elektrische) Schaltschränke angeordnet sind. Vorzugsweise können drei oder mehr Schaltschränke in einer Umspannstation angeordnet sein und insbesondere von der anmeldungsgemäßen Sicherheitsanordnung überwacht werden.

Insbesondere ist eine Umspannstation eingerichtet zum Koppeln mindestens eines ersten elektrischen Netzes (z.B. ein Mittelspannungs- oder Hochspannungsnetz) mit vorzugsweise einer Mehrzahl zweiter elektrischer Netze (z.B. Niederspannungsnetze bzw. Ortsnetze). Hierbei erfolgt eine Transformation der ersten Spannung (10 kV bis 360 kV) des ersten elektrischen Netzes in eine zweite Spannung (z.B. 400/230 V) für die Mehrzahl von elektrischen Netzen erfolgt. Hierzu dienen insbesondere die angeordneten Schaltschränke.

Die Sicherheitsanordnung umfasst mindestens eine Erfassungseinrichtung. Die Erfassungseinrichtung kann mindestens ein Empfangsmodul umfassen, um gemessene Zustandsparameter(-werte) zu erhalten bzw. zu erfassen. Beispielsweise kann die Erfassungseinrichtung eine Mehrzahl von Sensoren umfassen, eingerichtet zum Messen einer entsprechenden Mehrzahl von elektrischen Zustandsparametern eines (jeweiligen) Schaltschranks. Alternativ oder zusätzlich kann die Erfassungseinrichtung, insbesondere das Empfangsmodul, mit einer Mehrzahl von Sensoren verbunden sein, eingerichtet zum Messen einer entsprechenden Mehrzahl von elektrischen Parametern eines Schaltschranks. Anders ausgedrückt kann die Mehrzahl von Sensoren zumindest teilweise von der Erfassungseinrichtung umfasst sein und/oder zumindest teilweise nicht von der Erfassungseinrichtung umfasst sein.

Wie bereits beschrieben wurde, ist die Erfassungseinrichtung eingerichtet zum Erfassen einer Mehrzahl von elektrischen Zustandsparametern eines ersten Schaltschranks und zum Erfassen einer Mehrzahl von elektrischen Zustandsparametern des mindestens einen weiteren Schaltschranks. Insbesondere kann die Erfassungseinrichtung von zumindest jedem Schaltschrank der Umspannstation jeweils die Mehrzahl von elektrischen Zustandsparametern des jeweiligen Schaltschranks erfassen. Ein elektrischer Zustandsparameter ist insbesondere eine Information über den elektrischen Zustand des Schaltschranks, aus der zumindest bestimmt bzw. abgeleitet werden kann, ob der Schaltschrank noch unter Spannung steht oder nicht, also spannungsfrei ist.

Die Sicherheitsanordnung umfasst mindestens eine Auswerteeinrichtung. Insbesondere kann die Erfassungseinrichtung die erfassten jeweiligen elektrischen Zustandsparameter der Auswerteeinrichtung zur weiteren Verarbeitung zur Verfügung stellen. Die Auswerteeinrichtung bestimmt den jeweiligen Anlagenzustand jeweils basierend auf den erhaltenen elektrischen Zustandsparametern. Der Anlagenzustand gibt zumindest an, ob auf den entsprechenden Schaltschrank gefahrlos zugegriffen werden kann oder nicht, also der Schaltschrank spannungsfrei ist oder nicht. Insbesondere können zumindest zwei Anlagenzustände vorgesehen sein, wie ein Freigabezustand (Schaltschrank ist spannungsfrei) und ein Sperrzustand (Schaltschrank ist (zumindest nicht mit ausreichender Sicherheit) nicht spannungsfrei.

Die Auswerteeinrichtung ist insbesondere eingerichtet, einen Freigabezustand zu bestimmen, wenn die jeweilige Mehrzahl von elektrischen Zustandsparametern anzeigt, dass gefahrlos auf den entsprechenden Schaltschrank zugegriffen werden kann. Dies liegt beispielsweise dann vor, wenn vorzugsweise sämtliche elektrische Zustandsparameter anzeigen, dass der Schaltschrank spannungsfrei ist.

Die Auswerteeinrichtung ist ferner insbesondere eingerichtet, einen Sperrzustand zu bestimmen, wenn die jeweilige Mehrzahl von elektrischen Zustandsparametern anzeigt, dass auf den entsprechenden Schaltschrank nicht gefahrlos zugegriffen werden kann. Dies liegt beispielsweise dann vor, wenn mindestens ein Zustandsparameter anzeigt, dass der Schaltschrank nicht spannungsfrei ist.

Anmeldungsgemäß umfasst die Sicherheitsanordnung eine (Anzeigen-) Steuereinrichtung. Insbesondere kann die Auswerteeinrichtung die jeweils bestimmten Anlagenzustände der Steuereinrichtung zur weiteren Verarbeitung zur Verfügung stellen. Die Steuereinrichtung ist eingerichtet zum Ansteuern mindestens einer elektrischen Anzeigeneinrichtung, basierend auf dem jeweils bestimmten Anlagenzustand. Insbesondere kann die Sicherheitsanordnung die elektrische Anzeigeneinrichtung umfassen (oder zumindest mit dieser kommunikativ verbunden sein).

Vorzugsweise kann die Steuereinrichtung, basierend auf dem jeweils bestimmten Anlagenzustand, mindestens einen Steuerdatensatz erzeugen und insbesondere an die elektrische Anzeigeneinrichtung (z.B. über ein Kommunikationsnetz) senden, um zu bewirken, dass durch die elektrische Anzeigeneinrichtung (bzw. digitale Anzeigeneinrichtung) der bestimmte Anlagenzustand des ersten Schaltschranks an dem ersten Schaltschrank angezeigt wird und der bestimmte Anlagenzustand des weiteren Schaltschranks an dem weiteren Schaltschrank angezeigt wird.

Ein Anzeigen an dem Schaltschrank meint insbesondere, dass es für einen (vor dem Schaltschrank befindlichen) Monteur (unmittelbar) ersichtlich ist, ob auf diesen Schaltschrank gefahrlos zugegriffen werden kann oder nicht. Dies kann beispielsweise dadurch erfolgen, dass die Anzeigeneinrichtung eingerichtet ist, an dem jeweiligen Schaltschrank eine Information in Form mindestens eines Symbols, einer Farbe, einer Zeichenkette, eines Objekts und/oder dergleichen anzuzeigen, welche (unmittelbar) den jeweils bestimmten Anlagenzustand repräsentiert. Anmeldungsgemäß ist unter einem Anzeigen an einem Schaltschrank insbesondere zu verstehen, dass die Information auf dem Schaltschrank selbst (z.B. eine Schrankwand des Schaltschranks) oder unmittelbar benachbart und direkt dem Schaltschrank zuordnenbar (z.B. auf dem Boden (unmittelbar) vor dem Schaltschrank) angezeigt wird.

Die Sicherheitsanordnung kann zumindest teilweise in der Umspannstation und/oder zumindest teilweise in einer entfernt von der Umspannstation angeordneten Rechenvorrichtung, z.B. gebildet durch eine Serveranordnung (gebildet aus z.B. einem oder mehreren (verteilten) Server(n)), implementiert sein. Insbesondere kann eine anmeldungsgemäße Einrichtung zumindest teilweise durch Hardwaremodule (z.B. Prozessor, Speichermittel etc.) und/oder zumindest teilweise durch Softwaremodule (insbesondere in Form eines Computerprogramms mit Instruktionen, ausführbar durch einen Prozessor der Sicherheitsanordnung) gebildet sein.

Gemäß einer ersten Ausführungsform der anmeldungsgemäßen Sicherheitsanordnung kann die mindestens eine elektrische Anzeigeneinrichtung (insbesondere umfasst von der Sicherheitsanordnung) mindestens einen an einer (Schrank-)Wand eines Schaltschrank und/oder auf dem Boden (unmittelbar) vor einem Schaltschrank angeordneten ansteuerbaren LED-Streifen umfassen. Ein LED (light-emitting diode) Streifen kann insbesondere in einfacher Weise an einem Schaltschrank angebracht werden, beispielsweise an einer Schaltschrankwand und/oder dem Boden angeklebt werden. Vorzugsweise kann jeder LED-Streifen individuell (beispielsweise von einem (lokalen) Steuermodul der Anzeigeneinrichtung, basierend auf einen zuvor beschriebenen Steuerdatensatz) ansteuerbar sein, um den Anlagenzustand (wie zuvor beschrieben wurde) anzuzeigen.

Bei anderen Varianten kann jeder LED-Streifen auch direkt von der (zentralen) Steuereinrichtung ansteuerbar sein. Vorzugsweise kann mindestens ein LED-Matrix Streifen, insbesondere bevorzugt eine Mehrzahl von LED-Streifen zum Bilden eines LED-Matrix-Displays, vorgesehen sein.

Alternativ oder zusätzlich kann die mindestens eine elektrische Anzeigeneinrichtung (insbesondere umfasst von der Sicherheitsanordnung) mindestens ein an einer (Schrank-)Wand eines Schaltschranks angeordnetes und/oder auf dem Boden (unmittelbar) vor einem Schaltschrank angeordnetes ansteuerbares optisches Display umfassen. Beispielhafte und nicht abschließende optische Displays sind LCD (Flüssigkristallanzeige) - und LED-Displays. Diese können (individuell und) unmittelbar durch die Steuereinrichtung und/oder mittelbar über ein zuvor beschriebenes (lokales) Steuermodul ansteuerbar sein.

Alternativ oder zusätzlich kann die elektrische Anzeigeneinrichtung (insbesondere umfasst von der Sicherheitsanordnung) mindestens ein ansteuerbares Projektionsmodul umfassen, eingerichtet zum Projizieren des bestimmten Anlagenzustands an einer (Schrank-)Wand eines Schaltschranks und/oder auf dem Boden (unmittelbar) vor einem Schaltschrank. Beispielhafte und nicht abschließende Projektionsmodule sind LED Beamer, Laser Beamer, GoBo (Graphical optical blackout) -Spots, und andere Laser-Techniken. Hierdurch können Information über und zu dem Anlagenzustand besonders gut dargestellt werden.

Gemäß einer besonders bevorzugten Sicherheitsanordnung kann die Erfassungseinrichtung insbesondere eingerichtet sein, sämtliche für die Sicherheitsregeln nach der Norm DIN VDE 0105 relevanten Zustandsparameter eines Schaltschranks zu erfassen. Insbesondere kann die anmeldungsgemäße Sicherheitsanordnung die Voraussetzung der Norm DIN VDE 0105 erfüllen.

Erfindungsgemäß, umfassen die Mehrzahl von elektrischen Zustandsparametern eines Schaltschranks (sämtliche) folgende elektrische Parameter:
- einen Schaltzustand eines ersten elektrischen Schaltermoduls einer ersten Sammelschiene des Schaltschranks,
- einen Schaltzustand eines weiteren elektrischen Schaltermoduls einer weiteren Sammelschiene des Schaltschranks,
- einen Schaltzustand eines Erdungsschalters des Schaltschranks,
- einen Sensorzustand eines Zustandssensors, eingerichtet zum Erfassen eines zwischen zwei Kontakten eingefügten Trenners, und
- einen Netzzustandsparameter eines an einen Schaltschrank gekoppelten (zweiten) eklektischen Netzes.

Vorzugsweise kann jeder Schaltschrank über (genau) zwei Sammelschienen verfügen. Für den Fall, dass ein Schaltschrank nur eine Sammelschiene aufweist, kann eine Erfassung des Schaltzustands eines weiteren elektrischen Schaltermoduls entfallen. Für den Fall, dass drei oder mehr Sammelschienen vorhanden sind, können entsprechende weitere Schaltzustände erfasst werden.

Eine Sammelschiene ist insbesondere ein zentraler Verteiler, an dem ankommende und abgehende Leitungen angeschlossen sind. Jede Sammelschiene kann ein Schaltermodul umfassen, um die Sammelschiene von der (mindestens einen) ankommenden Leitung zu trennen. Insbesondere kann über ein Sensorelement der Schaltzustand (geschlossen oder geöffnet) eines Schaltermoduls gemessen werden. Der jeweilige Schaltzustand des ersten elektrischen Schaltermoduls und des weiteren elektrischen Schaltermoduls kann der Erfassungseinrichtung (von den entsprechenden Sensoren) bereitgestellt werden.

Ferner kann ein Schaltschrank über (mindestens) einen Erdungsschalter verfügen. Der Erdungsschalter ist eingerichtet, eine elektrische Verbindung zwischen dem Massepotential bzw. Erde und der mindestens einen Sammelschiene herzustellen. Insbesondere kann über ein Sensorelement der Schaltzustand (geschlossen oder geöffnet) des Erdungsschalters gemessen werden. Der Schaltzustand des Erdungsschalters kann der Erfassungseinrichtung (von dem entsprechenden Sensor) bereitgestellt werden.

Bei einer Trennung der Verbindung zwischen ankommender Leitung und Sammelschiene wird insbesondere ein Spalt zwischen zwei Kontaktelementen hergestellt. Insbesondere erfolgt ein physikalisches Trennen. In diesen Spalt wird insbesondere ein Trennelement, der so genannte Trenner (aus einem elektrisch nicht leitenden Material, z.B. in Form einer Platte), eingesetzt. Um zu überwachen, ob der Trenner (korrekt) eingesetzt ist, wird gemäß einer bevorzugten Ausführungsform vorgeschlagen, einen Zustandssensors anzuordnen, eingerichtet zum Erfassen eines zwischen den genannten zwei Kontakten eingefügten (bzw. nicht eingefügten) Trenners. Vorzugsweise kann als Zustandssensor hierfür ein Reed-Kontakt, eine Lichtschranke, ein Minischalter und/oder dergleichen eingesetzt werden. Der Zustand des Zustandssensors (z.B. eingesetzter Trenner detektiert oder nicht detektiert) kann der Erfassungseinrichtung bereitgestellt werden.

Ferner kann die Mehrzahl von Zustandsparametern einen Netzzustandsparameter (z.B. Spannung, Netzfrequenz, Strom und/oder dergleichen) eines an einen Schaltschrank gekoppelten (zweiten) elektrischen Netzes, wie ein zuvor beschriebenes Niederspannungsnetz, umfassen. Beispielsweise kann eine Messeinrichtung vorgesehen sein (in der Umspannstation oder außerhalb der Umspannstation), eingerichtet zum Messen des mindestens einen Netzzustandsparameters. Der Netzzustandsparameter (z.B. Spannung gleich 0 V oder ungleich 0 V; Strom gleich 0 A oder ungleich 0 A; Frequenz gleich 0 Hz oder ungleich 0 Hz) kann der Erfassungseinrichtung bereitgestellt werden.

Zusätzlich (oder alternativ) kann ein Schalzustand durch eine Messung eines elektrischen Parameters, wie eine Spannung, erfasst werden kann.

Gemäß einer weiteren Ausführungsform der anmeldungsgemäßen Sicherheitsanordnung kann ein Freigabebedingungsdatensatz vorgegebenen sein. Ein Freigabebedingungsdatensatz kann insbesondere für jeden der Mehrzahl von elektrischen Zustandsparametern (insbesondere die zuvor genannten fünf Zustandsparameter) jeweils mindestens eine (Freigabe-) Bedingung bzw. ein (Freigabe-) Kriterium vorgeben.

Die Auswerteeinrichtung kann eingerichtet sein zum Bestimmen eines Freigabezustands eines Schaltschranks (nur), wenn sämtliche erfasste elektrische Zustandsparameter des Schaltschranks (insbesondere die Schaltzustände des ersten und weiteren Schaltmoduls, des Erdungsschalters, der Sensorzustand des Zustandssensors und der Netzzustandsparameter) den vorgegebenen Freigabebedingungsdatensatz (insbesondere die jeweils vorgegebene (Freigabe-) Bedingung) erfüllen.

Beispielsweise kann vorgesehen sein, dass nur wenn die Schaltzustände des ersten und weiteren Schaltmoduls geöffnet sind, der Erdungsschalter geschlossen ist, ein eingelegter Trenner detektiert ist und der Netzzustandsparameter gleich 0 V (und/oder 0 A und/oder 0 Hz) ist, ein (zuvor beschriebener) Freigabezustand bestimmt wird.

Alternativ oder bevorzugt zusätzlich kann die Auswerteeinrichtung eingerichtet sein zum Bestimmen eines Zwischenzustands eines Schaltschranks, wenn mindestens einer der elektrischen Zustandsparameter des Schaltschranks (jedoch nicht sämtliche elektrische Zustandsparameter, insbesondere zumindest einer der genannten fünf Parameter nicht die zugehörige Freigabe-Bedingung erfüllt) den vorgegebenen Freigabebedingungsdatensatz (insbesondere die entsprechende vorgegebene (Freigabe-)Bedingung) erfüllt. Wenn beispielsweise nur detektiert wird, dass die Schaltzustände des ersten und weiteren Schaltmoduls geöffnet sind, jedoch der Erdungsschalter noch geöffnet ist, kann ein Zwischenzustand bestimmt werden. Ein Zwischenzustand kann anzeigen, dass zumindest in Teilen mit dem Abschaltvorgang begonnen wurde ("Verbreitungen für Arbeiten laufen"), dieser aber noch nicht abgeschlossen ist (also ein gefahrloser Zugriff noch nicht möglich ist).

Alternativ oder bevorzugt zusätzlich kann die Auswerteeinrichtung eingerichtet sein zum Bestimmen eines Sperrzustands eines Schaltschranks, wenn kein Zustandsparameter der elektrischen Zustandsparameter des Schaltschranks den vorgegebenen Freigabebedingungsdatensatz (insbesondere die jeweils vorgegebene (Freigabe-) Bedingung) erfüllt. Ein gefahrloser Zugriff ist nicht möglich.

Vorzugsweise kann die Anzeigeneinrichtung von der Steuereinrichtung entsprechend angesteuert werden, wie zuvor beschrieben wurde. Beispielsweise können die verschiedenen Anlagenzustände durch unterschiedliche Farben signalisiert werden (z.B. rot = Sperrzustand, gelb = Zwischenzustand, grün = Freigabezustand). Es versteht sich, dass bei anderen Varianten der Anmeldung alternativ oder zusätzlich geeignete Symbole, Wörter, Objekte etc. angezeigt werden können.

Besonders bevorzugt kann die Erfassungseinrichtung eingerichtet sein zum zumindest nahezu kontinuierlichen Erfassen der Mehrzahl von elektrischen Zustandsparametern eines ersten Schaltschranks (vorzugsweise von sämtlichen elektrischen Zustandsparametern) und zum Erfassen der Mehrzahl von elektrischen Zustandsparametern des mindestens einen weiteren Schaltschranks (vorzugsweise von sämtlichen elektrischen Zustandsparametern). Durch eine zumindest nahezu kontinuierliche Erfassung der jeweiligen Mehrzahl von elektrischen Zustandsparametern kann eine zumindest nahezu kontinuierliche Überwachung bereitgestellt werden. Beispielsweise kann ein jeweiliger Zustandsparameter regelmäßig gemessen und erfasst werden (z.B. jede x s, wie jede 0,1 s oder jede 1 s).

Die Auswerteeinrichtung kann eingerichtet sein zum zumindest nahezu kontinuierlichen Bestimmen des jeweiligen elektrischen Anlagenzustands der zumindest zwei Schaltschränke, basierend auf der jeweils (nahezu kontinuierlich) erfassten Mehrzahl von elektrischen Zustandsparametern. Hierdurch kann insbesondere während einer Arbeit an einem Schaltschrank der Zustand von vorzugsweise sämtlichen Schaltschränken überwacht werden. Ändert sich ein Zustand, beispielsweise aufgrund eines Fehlers, kann dies unmittelbar detektiert und vorzugsweise einem Monteur zur Anzeige gebracht werden. So kann beispielsweise die Steuereinrichtung unmittelbar bei Detektion einer Zustandsänderung die Anzeigeneinrichtung ansteuern, derart, dass die Zustandsänderung angezeigt wird. Beispielsweise kann sich die Farbe und/oder ein Symbol ändern (z.B. von grün nach gelb, wie zuvor beschrieben wurde). Zusätzlich kann ein akustisches Signal ausgesendet werden. Die Sicherheit kann noch weiter verbessert werden.

Gemäß einer weiteren Ausführungsform der anmeldungsgemäßen Sicherheitsanordnung kann die Sicherheitsanordnung mindestens einen in der Umspannstation angeordneten Nahfeldempfänger (z.B. ein Bluetooth-Empfänger, ein WLAN-Empfänger, ein RFID-Empfänger etc.) umfassen, eingerichtet zum Empfangen von mindestens einem durch ein mobiles Nutzergerät (z.B. ein Mobiltelefon, ein Laptop, ein Tablet-Computer, eine Smartcard etc., ein dediziertes Montage-Gerät, das ausschließlich für eine Montage-Anwendung ausgelegt ist) ausgesendeten Nutzerdatensatz, enthaltend zumindest eine Nutzerkennung des dem Nutzergerät zugeordneten Nutzers.

Die Nutzerkennung kann dem Nutzer systemweit eineindeutig zugeordnet sein. Beispielsweise kann die Nutzerkennung ein Nutzername, Kommunikationsadresse, IMEI des mobilen Nutzergeräts und/oder dergleichen sein.

Die Sicherheitsanordnung kann insbesondere mindestens einen Datenspeicher umfassen, eingerichtet zum Speichern des mindestens einen empfangenen Nutzerdatensatzes vorzugsweise zusammen mit dem Empfangszeitpunkt des Nutzerdatensatzes. Zusätzlich können durch den Datenspeicher weitere Daten gespeichert werden, wie Zeitdaten (z.B. Startzeit und Endzeit der Montage), Zustandsdaten bzw. -parameter der Schaltschränke während der Montage, erledigte Aufgaben (z.B. Wartungsarbeit, Behebung eines Fehlers etc.). Insbesondere können diese Daten der Nutzerkennung zugeordnet und entsprechend gespeichert werden. Insbesondere kann ein digitales Logbuch durch den Datenspeicher bereitgestellt werden.

Gemäß einer weiteren Ausführungsform der anmeldungsgemäßen Sicherheitsanordnung kann die Anzeigeneinrichtung (die von der Sicherheitsanordnung umfasst sein kann) eingerichtet sein zum Anzeigen eines Bearbeitungszustands an einem Schaltschrank, basierend auf einer erhaltenen Störungs- und/oder Wartungsinformation. Insbesondere kann die Steuereinrichtung die Anzeigeneinrichtung entsprechend ansteuern. Beispielsweise kann die Steuereinrichtung eine Störungsinformation erhalten, dass in einem bestimmten Schaltschrank einer bestimmten Umspannstation eine Störung vorliegt. Daraufhin kann die Steuereinrichtung die Anzeigeneinrichtung derart ansteuern, dass dieser Schaltschrank entsprechend gekennzeichnet ist (z.B. durch eine bestimmte Farbe, Symbol und/oder Text). In entsprechender Weise kann ein Wartungsvorgang oder dergleichen angezeigt werden. Insbesondere erfolgt die Anzeige derart, dass für den Monteur nach einem Betreten der Umspannstation (sofort) ersichtlich ist, an welchem Schaltschrank welche Arbeit durchzuführen ist. Anders ausgedrückt sind insbesondere geplante (Wartungs-) Arbeiten an der Anlage bekannt und können durch die "Visualisierungstechnik" dargestellt werden, so dass der Monteur nicht lange suchen muss, sondern direkt aufmerksam gemacht wird, an welcher Stelle die Wartungsarbeiten zu verrichten sind. Auch sind insbesondere Störungen bekannt und können ebenfalls an der richtigen Stelle visualisiert werden, so dass der Monteur nicht suchen muss.

Alternativ und/oder zusätzlich kann die Anzeigeneinrichtung eingerichtet sein zum Anzeigen von erhaltenen und einen Schaltschrank zuordnenbaren Nutzerdaten (Nutzername, Zeitpunkt, durchgeführte Arbeit etc.) an einem Schaltschrank. Insbesondere kann die Steuereinrichtung die Anzeigeneinrichtung entsprechend ansteuern. Beispielsweise kann angezeigt werden, welcher Monteur eine bestimmte Änderung eines Anlagenzustands und/oder eines Schaltzustands bewirkt hat (beispielsweise den Schaltschrank vor einer Montage spannungsfrei geschaltet und/oder nach einer Montage den Schaltschrank wieder mit Spannung beaufschlagt hat). Auch dies kann beispielsweise in Textform (unmittelbar) an dem jeweiligen Schaltschrank angezeigt werden.

Alternativ oder zusätzlich kann die Steuereinrichtung eine Aussendung einer Nachricht an das mobile Nutzergerät bewirken, das dem Monteur zugeordnet ist (der beispielsweise den Arbeitsvorgang gestartet hat). Insbesondere kann die Nachricht (z.B. eine E-Mail, ein SMS und/oder dergleichen) Daten enthalten, wie eine Zustandsänderung des mindestens einen Schaltschranks, eine Nutzerkennung (oder ein der Nutzerkennung zugeordneter Klarname oder dergleichen) des Monteurs, der diese Zustandsänderung bewirkt hat, Zeitdaten (wie Zeitpunkt der Zustandsänderung) und/oder dergleichen. Optional kann ein Monteur per Durchsage informiert werden.

Erfindungsgemäß, umfasst die Sicherheitsanordnung mindestens eine Nutzerpositionsbestimmungseinrichtung, eingerichtet zum Bestimmen einer Position eines Nutzers in der Umspannstation. Vorzugsweise kann eine Mehrzahl von zuvor beschriebenen Nahfeldempfänger in der Umspannstation (an vorbestimmten Positionen (z.B. Eingangstür, vor den jeweiligen Schaltschränken etc.) angeordnet sein. Unter Nutzung von Positionsbestimmungstechniken, wie Triangulationstechniken, kann eine Position des mobilen Nutzergeräts und damit des entsprechenden Nutzers, insbesondere Monteurs, in der Umspannstation erfolgen.

Erfindungsgemäß, umfasst die Sicherheitsanordnung mindestens eine akustische, optische und/oder haptische Warnmeldeeinrichtung, eingerichtet zum Generieren einer Warnung bei Detektion, dass der Nutzer sich in einem Sperrbereich der Umspannstation befindet. Der Sperrbereich kann ein (statischer) vorbestimmter Bereich in der Umspannstation sein und/oder ein dynamisch bestimmter Bereich, der insbesondere abhängig von den jeweiligen Anlagenzuständen der Schaltschränke bestimmt wird. Ein Sperrbereich ist insbesondere ein (geographischer) Bereich, in dem der Aufenthalt (augenblicklich) mit Gefahren verbunden ist.

Erfindungsgemäß, umfasst die Warnmeldeeinrichtung ein in dem Boden (im Bereich des Sperrbereichs) angeordnetes Vibrationsmodul. Dieses kann insbesondere durch die Steuereinrichtung angesteuert werden, wenn detektiert wird, dass sich eine Person in dem Sperrbereich befindet. Hierdurch kann ein Monteur zeitnah darauf aufmerksam gemacht werden, dass er sich augenblicklich in einem Sperr- bzw. Gefahrenbereich befindet.

Erfindungsgemäß, sind andere Module, wie akustische und/oder optische Module von der Warnmeldeeinrichtung umfasst. Die Sicherheit kann noch weiter verbessert werden.

Ein weiterer Aspekt der Anmeldung ist eine (zuvor beschriebene) Umspannstation, umfassend eine zuvor beschriebene Sicherheitsanordnung. Insbesondere kann bei diesem Aspekt der Anmeldung die Sicherheitsanordnung durch lokale (sich in oder an der Umspannstation befindliche) Rechenvorrichtungen gebildet sein.

Ein noch weiterer Aspekt der Anmeldung ist ein Sicherheitssystem. Das Sicherheitssystem umfasst:
- mindestens eine (zuvor beschriebene) Umspannstation, und
- mindestens eine entfernt von der Umspannstation angeordnete Rechenvorrichtung, und
- eine zumindest teilweise in der Rechenvorrichtung implementierte zuvor beschriebene Sicherheitsanordnung.

Vorzugsweise kann zumindest die Erfassungseinrichtung, Auswerteeinrichtung und Steuereinrichtung in der entfernt von der Umspannstation angeordneten Rechenvorrichtung (z.B. eine zentrale Steuerung in Form eines oder mehrerer Server(s)) implementiert sein. Zwischen den Einrichtungen (z.B. Schaltschränke, mindestens eine Anzeigeneinrichtung, Sensoren, Nahfeldempfänger und/oder dergleichen) der Umspannstation und der Rechenvorrichtung kann eine (drahtlose und/oder drahtgebundene) Kommunikationsverbindung vorhanden sein.

Ein noch weiterer Aspekt der Anmeldung ist ein Verfahren zum Betreiben einer Sicherheitsanordnung, gemäß Anspruch 15.

Wie bereits beschrieben wurde, kann eine Einrichtung, ein Modul oder eine Einheit zumindest teilweise aus Software und/oder zumindest teilweise aus Hardware gebildet sein. Insbesondere kann eine Vorrichtung /ein Element geeignete Rechenelemente (z.B. Prozessor, Speicher, etc.) umfassen.

In der Zeichnung zeigt:
- Fig. 1: eine schematische Ansicht eines Ausführungsbeispiels eines Sicherheitssystems gemäß der vorliegenden Anmeldung mit einem Ausführungsbeispiel einer Sicherheitsanordnung gemäß der vorliegenden Anmeldung,
- Fig. 2a: eine schematische Vorderansicht eines Ausführungsbeispiels einer Mehrzahl von Schaltschränken gemäß der vorliegenden Anmeldung,
- Fig. 2b: eine schematische Rückansicht der Mehrzahl von Schaltschränken gemäß der Figur 2a,
- Fig. 3: eine schematische Ansicht eines weiteren Ausführungsbeispiels eines Sicherheitssystems gemäß der vorliegenden Anmeldung mit einem weiteren Ausführungsbeispiel einer Sicherheitsanordnung gemäß der vorliegenden Anmeldung, und
- Fig. 4: ein Diagramm eines Ausführungsbeispiels eines Verfahrens gemäß der vorliegenden Anmeldung.

Nachfolgend werden für gleiche Elemente gleiche Bezugszeichen verwendet.

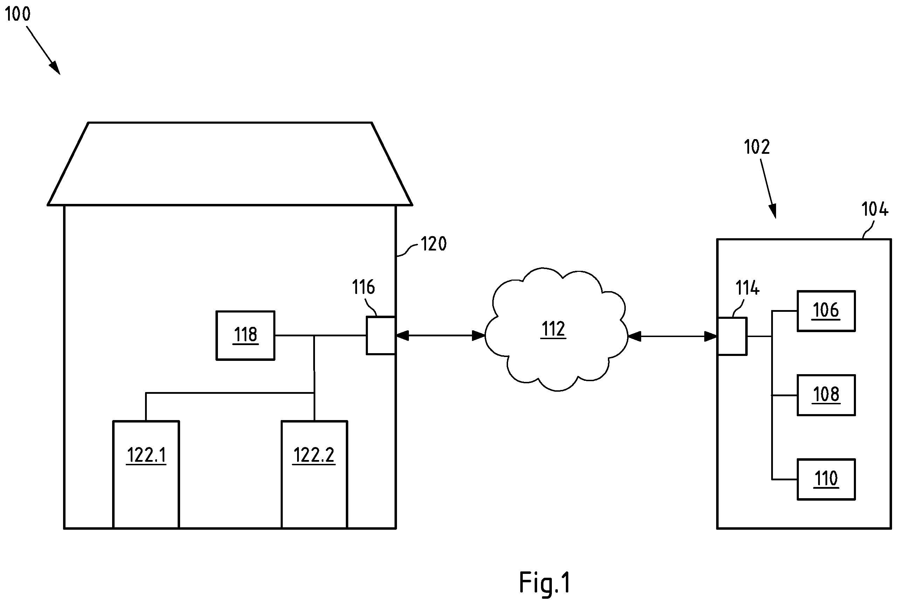

Die Figur 1 zeigt eine schematische Ansicht eines Ausführungsbeispiels eines Sicherheitssystems 102 gemäß der vorliegenden Anmeldung mit einem Ausführungsbeispiel einer Sicherheitsanordnung 100 gemäß der vorliegenden Anmeldung. Das vorliegende Sicherheitssystem 102 umfasst eine Umspannstation 120 und eine entfernt von der Umspannstation 102 angeordnete Rechenvorrichtung 104. Die Rechenvorrichtung 104 kann aus einem oder mehreren (verteilt angeordneten) Server(n) gebildet sein.

Die Rechenvorrichtung 104 weist vorliegend mindestens ein Kommunikationsmodul 114 auf. Auch die Umspannstation 120 weist mindestens ein Kommunikationsmodul 116 auf. Über ein (drahtloses und/oder drahtgebundenes) Kommunikationsnetz 112 kann eine insbesondere bidirektionale Kommunikation zwischen der Rechenvorrichtung 104 und der Umspannstation 120 erfolgen.

Die Umspannstation 120 ist vorliegend eine Mittelspannungs-Umspannstation 120. Wie zu erkennen ist, weist die Umspannstation 120 ein Gebäude auf, in dem zumindest zwei Schaltschränke 122.1, 122.2 angeordnet sind. Vorzugsweise können drei oder mehr Schaltschränke in einer Umspannstation angeordnet und insbesondere von der anmeldungsgemäßen Sicherheitsanordnung 100 überwacht werden.

Insbesondere ist eine Umspannstation 120 eingerichtet zum Koppeln mindestens eines ersten (vorliegend nicht gezeigten) elektrischen Netzes (z.B. Mittelspannungsnetz) mit vorzugsweise einer (nicht gezeigten) Mehrzahl zweiter elektrischer Netze (z.B. Niederspannungsnetze bzw. Ortsnetze), wobei eine Transformation der ersten Spannung (10 kV bis 360 kV) des ersten elektrischen Netzes in eine zweite Spannung (z.B. 400/230 V) für die Mehrzahl von elektrischen Netzen erfolgt. Hierzu sind insbesondere die angeordneten Schaltschränke 122.1, 122.2 vorgesehen.

Die Sicherheitsanordnung 100 umfasst eine Erfassungseinrichtung 106, eine Auswerteeinrichtung 108 und eine Steuereinrichtung 110. Vorliegend sind diese Einrichtungen 106, 108, 110 in der Rechenvorrichtung 104 implementiert. Es versteht sich, dass bei anderen Varianten der Anmeldung die Einrichtungen 106, 108, 110 zumindest teilweise in einer anderen (nicht gezeigten) Rechenvorrichtung, die sich beispielsweise in der Umspannstation befindet, implementiert sein können.

Die Erfassungseinrichtung 106 kann mindestens ein (nicht gezeigtes) Empfangsmodul umfassen, um insbesondere gemessene Zustandsparameter(-werte) zu erhalten. Beispielsweise kann die Erfassungseinrichtung 106 mit einer Mehrzahl von (nicht gezeigten und in der Umspannstation 104 angeordneten) Sensoren kommunikativ verbunden sein, wobei die Sensoren eingerichtet sind zum Messen einer entsprechenden Mehrzahl von elektrischen Parametern eines entsprechenden Schaltschranks 122.1, 122.2. Alternativ oder zusätzlich kann die Erfassungseinrichtung auch die Sensoren zumindest teilweise umfassen.

Wie bereits beschrieben wurde, ist die Erfassungseinrichtung 106 eingerichtet zum Erfassen einer Mehrzahl von elektrischen Zustandsparametern eines ersten Schaltschranks 122.1 und zum Erfassen einer Mehrzahl von elektrischen Zustandsparametern mindestens eines weiteren Schaltschranks 122.2. Insbesondere kann die Erfassungseinrichtung 106 von zumindest jedem Schaltschrank 122.1, 122.2 der Umspannstation 120 jeweils die Mehrzahl von elektrischen Zustandsparametern des jeweiligen Schaltschranks 122.1, 122.2 erfassen.

Ein elektrischer Zustandsparameter ist insbesondere eine Information über einen elektrischen Teil-Zustand des Schaltschranks 122.1, 122.2, aus der zumindest bestimmt werden kann, ob der Schaltschrank 122.1, 122.2 noch unter Spannung steht oder nicht.

Die Auswerteeinrichtung 108 ist zum Auswerten der erfassten Zustandsparameter eingerichtet, insbesondere zum Bestimmen des jeweiligen (augenblicklichen) Anlagenzustands der zumindest zwei Schaltschränke 122.1, 122.2. Der Anlagenzustand gibt zumindest an, ob auf den entsprechenden Schaltschrank 122.1, 122.2 gefahrlos zugegriffen werden kann oder nicht. Insbesondere können zumindest zwei Anlagenzustände vorgesehen sein, wie ein Freigabezustand und ein Sperrzustand. Optional kann vorzugsweise zusätzlich ein Zwischenzustand vorgesehen, wie zuvor beschrieben wurde.

Die Steuereinrichtung 110 ist zum Ansteuern einer Anzeigeneinrichtung 118 eingerichtet. Die mindestens eine elektrische Anzeigeneinrichtung 118 ist in der Umspannstation 120 angeordnet. Beispielhaft umfasst die elektrische (ansteuerbare) Anzeigeneinrichtung 118 vorliegend ein (nicht gezeigtes) Projektionsmodul, eingerichtet zum Projizieren des bestimmten Anlagenzustands an einer (Schrank-)Wand eines Schaltschranks 122.1, 122.2 und/oder auf dem Boden (unmittelbar) vor einem Schaltschrank 122.1, 122.2. Beispielhafte und nicht abschließende Projektionsmodule sind LED Beamer, Laser Beamer, GoBo (Graphical optical blackout) -Spots, und andere Laser-Techniken. Hierdurch können Information über und zu dem Anlagenzustand besonders gut dargestellt werden.

Die Steuereinrichtung 110 kann insbesondere einen Steuerdatensatz erzeugen und insbesondere an die elektrische Anzeigeneinrichtung 118 über das Kommunikationsnetz 112 senden, um zu bewirken, dass durch die elektrische Anzeigeneinrichtung 118 (bzw. digitale Anzeigeneinrichtung 118) der durch die Auswerteeinrichtung 108 bestimmte Anlagenzustand des ersten Schaltschranks 122.1 an dem ersten Schaltschrank 122.1 angezeigt wird und der durch die Auswerteeinrichtung 108 bestimmte Anlagenzustand des weiteren Schaltschranks 122.2 an dem weiteren Schaltschrank 122.2 angezeigt wird.

Die Einrichtungen der Umspannstation und die Einrichtungen der Rechenvorrichtung können jeweils durch ein internes (drahtloses und/oder drahtgebundenes) Kommunikationsnetz verbunden sein.

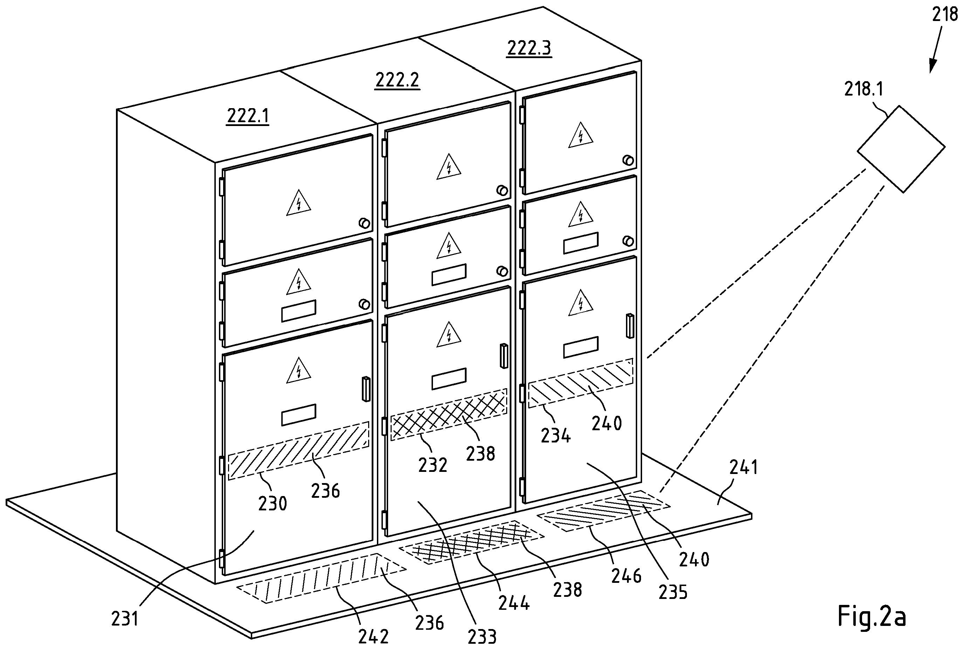

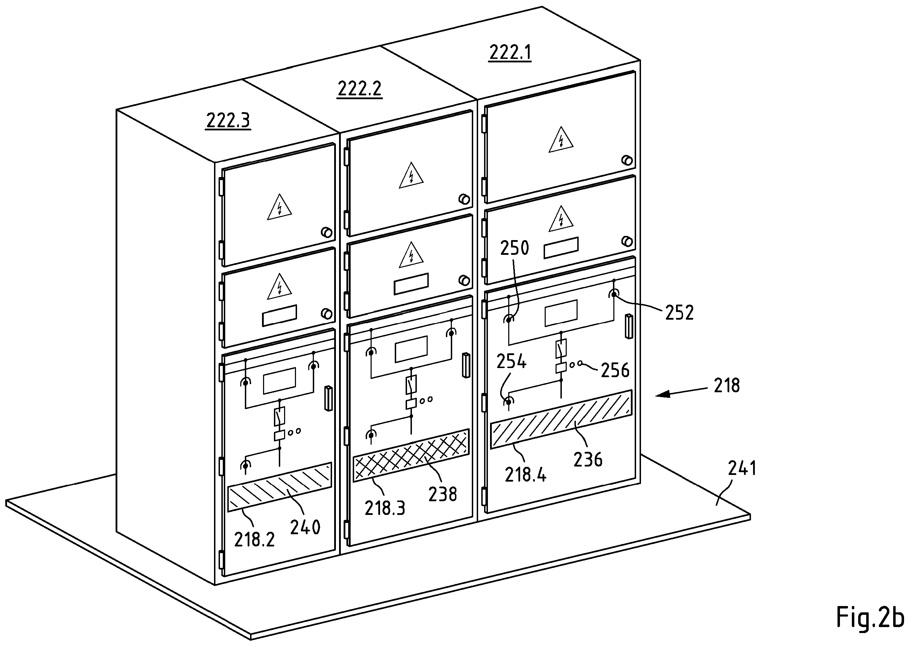

Die Figur 2a zeigt eine schematische Vorderansicht eines Ausführungsbeispiels einer Mehrzahl von Schaltschränken 222.1, 222.2, 222.3 gemäß der vorliegenden Anmeldung und die Figur 2b eine schematische Rückansicht der Mehrzahl von Schaltschränken 222.1, 222.2, 222.3 gemäß der Figur 2a. Insbesondere werden die beispielhaft dargestellten Schaltschränke 222.1, 222.2, 222.3 durch eine Sicherheitsanordnung (z.B. nach Figur 1) überwacht und sind insbesondere in einer Umspannstation angeordnet.

Wie in Figur 2a gezeigt ist, kann die (durch eine Steuereinrichtung ansteuerbare) Anzeigeneinrichtung 218 ein Projektionsmodul 218.1 umfassen. Der jeweilige Anlagenzustand 236, 238, 240 kann an dem jeweiligen Schaltschrank 222.1, 222.2, 222.3 angezeigt werden, vorliegend beispielhaft auf der jeweiligen Schrankwand 231, 233, 235 (vgl. Bezugszeichen 230, 232, 234) und (unmittelbar) auf dem Boden 241 (vgl. Bezugszeichen 242, 244, 246) vor dem jeweiligen Schaltschrank 222.1, 222.2, 222.3. Beispielhaft weisen die drei dargestellten Schaltschränke 222.1, 222.2, 222.3 unterschiedlichen Anlagenzustände 236, 238, 240 auf (angedeutet durch die jeweils unterschiedlichen Schraffuren (stellvertretend für z.B. unterschiedliche Farben, wie rot, gelb und grün)).

Die Figur 2b zeigt insbesondere die Rückseite der Schaltschränke 222.1, 222.2, 222.3 der Figur 2a. Die beispielhafte Anzeigeneinrichtung 218 umfasst ferner mindestens einen ansteuerbaren LED-Streifen 218.2, 218.3, 218.4. Vorliegend ist beispielhaft an jeder Schrankwand eines jeden Schaltschranks 222.1, 222.2, 222.3. jeweils ein LED-Streifen 218.2, 218.3, 218.4 angeordnet. Die LED-Streifen 218.2, 218.3, 218.4

Der dritte Schaltschrank 222.3 weist vorliegend einen Sperrzustand 240 auf (beispielsweise kenntlich gemacht durch eine rote Farbe und/oder (zusätzlichen) Symbolen und/oder (zusätzlichen) Schriftzeichen).

Beispielsweise kann ein Freigabebedingungsdatensatz vorgegeben sein. Die (nicht dargestellte) Auswerteeinrichtung kann eingerichtet sein zum Bestimmen eines Sperrzustands eines Schaltschranks, wenn kein Zustandsparameter der elektrischen Zustandsparameter des Schaltschranks den vorgegebenen Freigabebedingungsdatensatz erfüllt.

Erfindungsgemäß werden folgende Zustandsparameter von jedem Schaltschrank 222.1, 222.2, 222.3 erfasst:
- Schaltzustand eines ersten elektrischen Schaltermoduls 250 einer ersten (nicht dargestellten) Sammelschiene eines Schaltschranks 222.1, 222.2, 222.3 ein vorgegebenes,
- einen Schaltzustand eines weiteren elektrischen Schaltermoduls 252 einer weiteren (nicht dargestellten) Sammelschiene eines Schaltschranks 222.1, 222.2, 222.3,
- einen Schaltzustand eines Erdungsschalters 254 eines Schaltschranks 222.1, 222.2, 222.3,
- einen Sensorzustand eines (nicht dargestellten) Zustandssensors (z.B. Reed-Kontakt, eine Lichtschranke, ein Minischalter und/oder dergleichen), eingerichtet zum Erfassen eines zwischen zwei Kontakten eingefügten (nicht dargestellten) Trenners, und
- einen Netzzustandsparameter eines an einen Schaltschrank 222.1, 222.2, 222.3 gekoppelten eklektischen Netzes.

Der Freigabebedingungsdatensatz kann vorzugsweise für jeden der genannten erfassten elektrischen Zustandsparameter jeweils eine vorgegebene Freigabe-Bedingung umfassen. Beispielsweise kann eine erste Freigabe-Bedingung sein, dass der Schaltzustand des eines ersten elektrischen Schaltermoduls 250 "offen" ist; eine zweite Freigabe-Bedingung, dass der Schaltzustand eines weiteren elektrischen Schaltermoduls 252 "offen" ist; eine dritte Freigabe-Bedingung kann sein, dass der Schaltzustand eines Erdungsschalters 254 "geschlossen" ist, eine vierte Freigabe-Bedingung kann sein, dass der Sensorzustand eines Zustandssensors "Trenner eingelegt" ist; und eine fünfte Freigabe-Bedingung kann sein, dass der Netzzustandsparameter "spannungsfrei" (z.B. U= 0 V) ist.

Die Auswerteeinrichtung ist insbesondere eingerichtet zum Bestimmen eines Sperrzustands 240 eines Schaltschranks 222.3, wenn kein Zustandsparameter der elektrischen Zustandsparameter des Schaltschranks 222.3 den vorgegebenen Freigabebedingungsdatensatz (also insbesondere die genannten fünf Freigabe-Bedingungen) erfüllt.

Ferner kann die Auswerteeinrichtung insbesondere eingerichtet sein zum Bestimmen eines Freigabezustands 236 eines Schaltschranks 222.1, wenn sämtliche erfassten elektrischen Zustandsparameter des Schaltschranks 222.1 den vorgegebenen Freigabebedingungsdatensatz (also insbesondere die genannten fünf Freigabe-Bedingungen) erfüllen.

Optional kann die Auswerteeinrichtung eingerichtet sein zum Bestimmen eines Zwischenzustands 238 eines Schaltschranks 222.2, wenn mindestens einer der elektrischen Zustandsparameter des Schaltschranks 222.2 den vorgegebenen Freigabebedingungsdatensatz (also insbesondere mindestens eine der genannten fünf Freigabe-Bedingungen) erfüllt, jedoch mindestens eine der genannten fünf Freigabe-Bedingungen (noch) nicht erfüllt.

Es sei noch angemerkt, dass mit dem Bezugszeichen 256 eine Messmöglichkeit zum Messen der Spannungsfreiheit anzeigt. Sämtliche Schaltschränke können zumindest ähnlich gebildet sein.

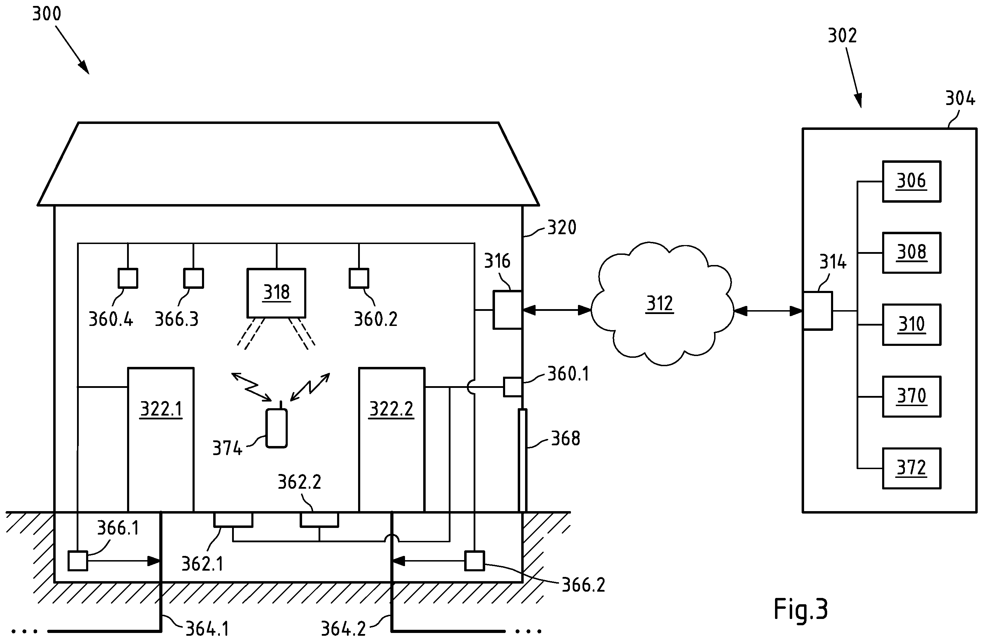

Die Figur 3 zeigt eine schematische Ansicht eines weiteren Ausführungsbeispiels eines Sicherheitssystems 300 gemäß der vorliegenden Anmeldung mit einem weiteren Ausführungsbeispiel einer Sicherheitsanordnung 302 gemäß der vorliegenden Anmeldung. Zur Vermeidung von Wiederholungen werden nachfolgend im Wesentlichen nur die Unterschiede zu den vorherigen Ausführungsbeispielen erläutert und ansonsten auf die vorherigen Ausführungen verwiesen.

Wie bereits beschrieben wurde, kann ein Schaltschrank 322.1, 322.2 zum Verbinden eines ersten (nicht dargestellten) elektrischen Netzes mit mindestens einen zweiten elektrischen Netz 364.1, 364.2 vorgesehen sein. Beispielhaft sind ein erstes zweites Netz 364.1 und ein weiteres zweites Netz 364.2 dargestellt. Zum Messen eines Netzzustandsparameters eines zweiten Netzes 364.1, 364.2 kann die Umspannstation 320 ein erstes Sensormodul 366.1 (zum Messen mindestens eines Netzzustandsparameters, wie Spannung, Strom etc., des ersten zweiten Netzes 364.1) und ein weiteres Sensormodul 366.2 (zum Messen mindestens eines Netzzustandsparameters, wie Spannung, Strom etc., des weiteren zweiten Netzes 364.2) umfassen. Es versteht sich, dass bei anderen Varianten der Anmeldung weitere zweite Netze und/oder Sensormodul an einem anderen oder weiteren Ort vorgesehen sein können.

Die Umspannstation 320 kann durch eine Tür 368 von einer berechtigten Person (insbesondere ein Monteur) betreten werden. Der Monteur kann insbesondere ein mobiles Nutzergerät 374 (z.B. ein Smartphone 374 oder dergleichen) bei sich führen. Das mobile Nutzergerät 374 ist insbesondere ein per Funk (z.B. Bluetooth, RFID, Ultra-Wideband etc.) auslesbar. Das mobile Nutzergerät 374 kann vorzugsweise dauerhaft an der Schutzausrüstung (z.B. am Helm) des Monteurs angebracht sein.

Neben der Möglichkeit, dass der Monteur Nachrichten in herkömmlicher Weise auf dem Smartphone 374 beispielsweise über durchzuführende Arbeiten, Anlagenzustände etc. erhalten kann, kann unter Nutzung des mobilen Nutzergeräts 374 (jederzeit) die Position des Monteurs in der Umspannstation 320 bestimmt werden und/oder ein digitales Logbuch über Arbeiten an der Umspannstation 320 geführt werden.

Vorzugsweise kann in der Umspannstation 320 eine Mehrzahl von Nahfeldempfänger 360.1 bis 360.4 (z.B. Bluetooth, RFID, Ultra-Wideband etc.) angeordnet sein. Vorzugsweise kann mindestens ein Nahfeldempfänger 360.1 (unmittelbar) benachbart zu der mindestens einen Tür 368 angeordnet sein, um insbesondere ein Eintreten und/oder Verlassen der Umspannstation 320 zu detektieren. Weitere Nahfeldempfänger können angeordnet sein, beispielsweise kann benachbart zu jedem Schaltschrank ein Nahfeldempfänger angeordnet sein.

Insbesondere kann jeder Nahfeldempfänger 360.1 bis 360.4 eingerichtet sein zum Empfangen von mindestens einem durch ein mobiles Nutzergerät 374 ausgesendeten Nutzerdatensatz, enthaltend zumindest eine Nutzerkennung des dem Nutzergerät 374 zugeordneten Nutzers. Der Nutzerdatensatz (vorzugsweise zusammen mit einer Positionsinformation des empfangenden Nahfeldempfängers 360.1 bis 360.4 (z.B. eine systemweit eineindeutige Kennung des Nahfeldempfängers) und/oder ein Zeitstempel) kann an die Rechenvorrichtung 304 übertragen werden. Die Sicherheitsanordnung 302, insbesondere die Rechenvorrichtung 304, kann insbesondere mindestens einen Datenspeicher 370 umfassen, eingerichtet zum Speichern des mindestens einen empfangenen Nutzerdatensatzes vorzugsweise zusammen mit dem Empfangszeitpunkt des Nutzerdatensatzes. Insbesondere kann ein digitales Logbuch bereitgestellt werden.

Erfindungsgemäß, umfasst die Sicherheitsanordnung 302 mindestens eine Nutzerpositionsbestimmungseinrichtung 372, eingerichtet zum Bestimmen einer Position eines Nutzers in der Umspannstation 320. Insbesondere kann aus den von der Mehrzahl an Nahfeldempfänger 360.1 bis 360.4 erhaltenen Daten (von einem Nutzergerät 374) beispielsweise unter Anwendung einer Triangulationstechnik die augenblickliche Position des Monteurs oder eines anderen Nutzers bestimmt werden. Es versteht sich, dass die Nutzerpositionsbestimmungseinrichtung auch in einer lokalen Einrichtung der Umspannstation angeordnet sein kann.

Erfindungsgemäß weist die Sicherheitsanordnung 302 mindestens eine akustische, optische und/oder haptische Warnmeldeeinrichtung 362.1, 362.2 auf, eingerichtet zum Generieren einer Warnung bei Detektion, dass sich der Nutzer bzw. Monteur in einem Sperrbereich der Umspannstation 320 befindet. Der Sperrbereich kann ein (statischer) vorbestimmter Bereich in der Umspannstation 320 sein und/oder ein dynamisch bestimmter Bereich, der insbesondere abhängig von den jeweiligen Anlagenzuständen der Schaltschränke 322.1, 322.2 bestimmt wird. Ein Sperrbereich ist insbesondere ein (geographischer) Bereich, in dem der Aufenthalt (augenblicklich) mit Gefahren verbunden ist. Beispielsweise kann als Sperrbereich der Bereich von den Schaltschänken bestimmt werden, die sich in einem Sperrzustand befinden.

Erfindungsgemäß, umfasst die Warnmeldeeinrichtung 362.1, 362.2 ein in dem Boden 341 (im Bereich des Sperrbereichs) angeordnetes Vibrationsmodul 362.1, 362.2.

Dieses kann insbesondere durch die Steuereinrichtung 310 angesteuert werden, wenn durch die Nutzerpositionsbestimmungseinrichtung detektiert wird, dass sich eine Person in dem Sperrbereich befindet.

Optional kann die Anzeigeneinrichtung 318 eingerichtet sein zum Anzeigen eines Bearbeitungszustands an einem Schaltschrank 322.1, 322.2, basierend auf einer erhaltenen Störungs- und/oder Wartungsinformation und/oder zum Anzeigen von erhaltenen und einen Schaltschrank 322.1, 322.2 zuordnenbaren Nutzerdaten an einem Schaltschrank 322.1, 322.2.

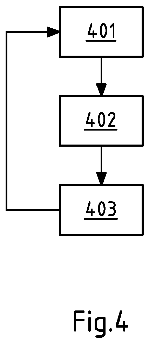

Die Figur 4 zeigt ein Diagramm eines Ausführungsbeispiels eines Verfahrens gemäß der vorliegenden Anmeldung. Das Verfahren kann insbesondere zum Betreiben eines zuvor beispielhaft beschriebenen Systems 100, 300, insbesondere der Sicherheitsanordnung 102, 302, eingesetzt werden.

In einem ersten Schritt 401 erfolgt ein Erfassen einer Mehrzahl von elektrischen Zustandsparametern eines ersten Schaltschranks und zum Erfassen einer Mehrzahl von elektrischen Zustandsparametern des mindestens einen weiteren Schaltschranks, wie zuvor beschrieben wurde.

In einem Schritt 402 erfolgt ein Bestimmen des jeweiligen elektrischen Anlagenzustands der zumindest zwei Schaltschränke, basierend auf der jeweils erfassten Mehrzahl von elektrischen Zustandsparametern, wie zuvor beschrieben wurde.

In einem weiteren Schritt 403 erfolgt ein Ansteuern mindestens einer elektrischen Anzeigeneinrichtung, derart, dass der bestimmte Anlagenzustands des ersten Schaltschranks an dem ersten Schaltschrank angezeigt wird und der bestimmte Anlagenzustand des weiteren Schaltschranks an dem weiteren Schaltschrank angezeigt wird, wie zuvor beschrieben wurde.

Die Verfahrensschritte 401 bis 403 können vorzugsweise nahezu kontinuierlich durchgeführt werden. Das Verfahren kann beispielsweise bei Detektion eines Betretens der Umspannstation gestartet und bei Verlassen der (letzten) Person beendet werden.

Das zuvor beschriebene System erkennt anhand des Anlagenzustandes, dass ein Schaltschrank abgeschaltet ist. Über eine Visualisierung kann dieser Zustand sowohl für die freigeschalteten als auch für die nicht freigeschalteten Schaltschränke angezeigt werden. Optional wird angezeigt, welcher Monteur wann die Freischaltung durchgeführt hat. Gleichzeitig können Ab- und Anschaltzeiten sowie der Monteur, der dies veranlasst hat, im digitalen Stations-Logbuch, welches durch den Datenspeicher gebildet werden kann, dokumentiert werden.

## Patentansprüche

1. Sicherheitsanordnung (102, 302) für zumindest zwei Schaltschränke (122.1, 122.2, 222.1, 222.2, 222.3, 322.1, 322.2) einer Umspannstation (120, 320), umfassend:
- mindestens eine Erfassungseinrichtung (106, 306), eingerichtet zum Erfassen einer Mehrzahl von elektrischen Zustandsparametern eines ersten Schaltschranks (122.1, 122.2, 222.1, 222.2, 222.3, 322.1, 322.2) und zum Erfassen einer Mehrzahl von elektrischen Zustandsparametern des mindestens einen weiteren Schaltschranks (122.1, 122.2, 222.1, 222.2, 222.3, 322.1, 322.2),
- mindestens eine Auswerteeinrichtung (108, 309), eingerichtet zumindest zum Bestimmen des jeweiligen elektrischen Anlagenzustands der zumindest zwei Schaltschränke (122.1, 122.2, 222.1, 222.2, 222.3, 322.1, 322.2), basierend auf der jeweils erfassten Mehrzahl von elektrischen Zustandsparametern, und
- mindestens eine Steuereinrichtung (110 ,310), eingerichtet zum Ansteuern mindestens einer elektrischen Anzeigeneinrichtung (118, 218.1, 218.2, 218.3, 218.4, 318), derart, dass der bestimmte Anlagenzustand des ersten Schaltschranks (122.1, 122.2, 222.1, 222.2, 222.3, 322.1, 322.2) an dem ersten Schaltschrank (122.1, 122.2, 222.1, 222.2, 222.3, 322.1, 322.2) angezeigt wird und der bestimmte Anlagenzustand des weiteren Schaltschranks (122.1, 122.2, 222.1, 222.2, 222.3, 322.1, 322.2) an dem weiteren Schaltschrank (122.1, 122.2, 222.1, 222.2, 222.3, 322.1, 322.2) angezeigt wird, wobei die Mehrzahl von elektrischen Zustandsparametern eines Schaltschranks (122.1, 122.2, 222.1, 222.2, 222.3, 322.1, 322.2) folgende elektrische Parameter umfasst:
- einen Schaltzustand eines ersten elektrischen Schaltermoduls (250) einer ersten Sammelschiene des Schaltschranks (122.1, 122.2, 222.1, 222.2, 222.3, 322.1, 322.2),
- einen Schaltzustand eines weiteren elektrischen Schaltermoduls (252) einer weiteren Sammelschiene des Schaltschranks (122.1, 122.2, 222.1, 222.2, 222.3, 322.1, 322.2),
- einen Schaltzustand eines Erdungsschalters (254) des Schaltschranks (122.1, 122.2, 222.1, 222.2, 222.3, 322.1, 322.2),
- einen Sensorzustand eines Zustandssensors, eingerichtet zum Erfassen eines zwischen zwei Kontakten eingefügten Trenners, und
- einen Netzzustandsparameter eines an einen Schaltschrank (122.1, 122.2, 222.1, 222.2, 222.3, 322.1, 322.2) gekoppelten elektrischen Netzes (364.1, 364.2),
- wobei die Sicherheitsanordnung (102, 302) mindestens eine Nutzerpositionsbestimmungseinrichtung (372) umfasst, eingerichtet zum Bestimmen einer Position eines Nutzers in der Umspannstation (102, 302),
- wobei die Sicherheitsanordnung (102, 302) mindestens eine akustische, optische und/oder haptische Warnmeldeeinrichtung (362.1, 362.2) umfasst, eingerichtet zum Generieren einer Warnung bei Detektion, dass der Nutzer sich in einem Sperrbereich der Umspannstation befindet,
- und wobei die Warnmeldeeinrichtung (362.1, 362.2) ein in dem Boden (241, 341) angeordnetes Vibrationsmodul umfasst.

2. Sicherheitsanordnung (102, 302) nach Anspruch 1, wobei
die elektrische Anzeigeneinrichtung (118, 218.1, 218.2, 218.3, 218.4, 318) mindestens einen an einer Wand (231, 233, 235) eines Schaltschranks (122.1, 122.2, 222.1, 222.2, 222.3, 322.1, 322.2) angeordneten ansteuerbaren LED-Streifen (118, 218.1, 218.2, 218.3, 218.4, 318) umfasst.

3. Sicherheitsanordnung (102, 302) nach Anspruch 1, wobei
die elektrische Anzeigeneinrichtung (118, 218.1, 218.2, 218.3, 218.4, 318) mindestens einen auf dem Boden (241, 341) vor einem Schaltschrank (122.1, 122.2, 222.1, 222.2, 222.3, 322.1, 322.2) angeordneten ansteuerbaren LED-Streifen (118, 218.1, 218.2, 218.3, 218.4, 318) umfasst.

4. Sicherheitsanordnung (102, 302) nach einem der vorherigen Ansprüche, wobei die elektrische Anzeigeneinrichtung (118, 218.1, 218.2, 218.3, 218.4, 318) mindestens ein an einer Wand (231, 233, 235) eines Schaltschranks (122.1, 122.2, 222.1, 222.2, 222.3, 322.1, 322.2) angeordnetes und/oder auf dem Boden (241, 341) vor einem Schaltschrank (122.1, 122.2, 222.1, 222.2, 222.3, 322.1, 322.2) angeordnetes ansteuerbares optisches Display (118, 218.1, 218.2, 218.3, 218.4, 318) umfasst.

5. Sicherheitsanordnung (102, 302) nach einem der vorherigen Ansprüche, wobei die elektrische Anzeigeneinrichtung (118, 218.1, 218.2, 218.3, 218.4, 318) mindestens ein ansteuerbares Projektionsmodul (118, 218.1, 218.2, 218.3, 218.4, 318) umfasst, eingerichtet zum Projizieren des bestimmten Anlagenzustands an einer Wand (231, 233, 235) eines Schaltschranks (122.1, 122.2, 222.1, 222.2, 222.3, 322.1, 322.2) und/oder auf dem Boden (241, 341) vor einem Schaltschrank (122.1, 122.2, 222.1, 222.2, 222.3, 322.1, 322.2).

6. Sicherheitsanordnung (102, 302) nach einem der vorherigen Ansprüche, wobei ein Freigabebedingungsdatensatz vorgegebenen ist, und
- die Auswerteeinrichtung (108, 308) eingerichtet ist zum Bestimmen eines Freigabezustands eines Schaltschranks (122.1, 122.2, 222.1, 222.2, 222.3, 322.1, 322.2), wenn sämtliche erfasste elektrische Zustandsparameter des Schaltschranks (122.1, 122.2, 222.1, 222.2, 222.3, 322.1, 322.2) den vorgegebenen Freigabebedingungsdatensatz erfüllen.

7. Sicherheitsanordnung (102, 302) nach einem der vorherigen Ansprüche, wobei ein Freigabebedingungsdatensatz vorgegebenen ist, und
- die Auswerteeinrichtung (108, 308) eingerichtet ist zum Bestimmen eines Zwischenzustands eines Schaltschranks (122.1, 122.2, 222.1, 222.2, 222.3, 322.1, 322.2), wenn mindestens einer der elektrischen Zustandsparameter des Schaltschranks (122.1, 122.2, 222.1, 222.2, 222.3, 322.1, 322.2) den vorgegebenen Freigabebedingungsdatensatz erfüllt.

8. Sicherheitsanordnung (102, 302) nach einem der vorherigen Ansprüche, wobei ein Freigabebedingungsdatensatz vorgegebenen ist, und
- die Auswerteeinrichtung (108, 308) eingerichtet ist zum Bestimmen eines Sperrzustands eines Schaltschranks (122.1, 122.2, 222.1, 222.2, 222.3, 322.1, 322.2), wenn kein Zustandsparameter der elektrischen Zustandsparameter des Schaltschranks (122.1, 122.2, 222.1, 222.2, 222.3, 322.1, 322.2) den vorgegebenen Freigabebedingungsdatensatz erfüllt.

9. Sicherheitsanordnung (102, 302) nach einem der vorherigen Ansprüche, wobei die Erfassungseinrichtung (106, 306) eingerichtet ist zum zumindest nahezu kontinuierlichen Erfassen einer Mehrzahl von elektrischen Zustandsparametern eines ersten Schaltschranks (122.1, 122.2, 222.1, 222.2, 222.3, 322.1, 322.2) und zum Erfassen einer Mehrzahl von elektrischen Zustandsparametern des mindestens einen weiteren Schaltschranks (122.1, 122.2, 222.1, 222.2, 222.3, 322.1, 322.2),
- die Auswerteeinrichtung (108, 308) eingerichtet ist zum zumindest nahezu kontinuierlichen Bestimmen des jeweiligen elektrischen Anlagenzustands der zumindest zwei Schaltschränke (122.1, 122.2, 222.1, 222.2, 222.3, 322.1, 322.2), basierend auf der jeweils erfassten Mehrzahl von elektrischen Zustandsparametern.

10. Sicherheitsanordnung (102, 302) nach einem der vorherigen Ansprüche, wobei die Sicherheitsanordnung (102, 302) mindestens einen in der Umspannstation (120, 320) angeordneten Nahfeldempfänger (360.1, 360.2, 360.3, 360.4) umfasst, eingerichtet zum Empfangen von mindestens einem durch ein mobiles Nutzergerät (374) ausgesendeten Nutzerdatensatz, enthaltend zumindest eine Nutzerkennung des dem mobilen Nutzergerät (374) zugeordneten Nutzers, und
- die Sicherheitsanordnung (102, 302) insbesondere mindestens einen Datenspeicher (370) umfasst, eingerichtet zum Speichern des mindestens einen empfangenen Nutzerdatensatzes zusammen mit dem Empfangszeitpunkt des Nutzerdatensatzes.

11. Sicherheitsanordnung (102, 302) nach einem der vorherigen Ansprüche, wobei die Anzeigeneinrichtung (118, 218.1, 218.2, 218.3, 218.4, 318) eingerichtet ist zum Anzeigen eines Bearbeitungszustands an einem Schaltschrank, basierend auf einer erhaltenen Störungs- und/oder Wartungsinformation, und/oder
- die Anzeigeneinrichtung (118, 218.1, 218.2, 218.3, 218.4, 318) eingerichtet ist zum Anzeigen von erhaltenen und einen Schaltschrank (122.1, 122.2, 222.1, 222.2, 222.3, 322.1, 322.2) zuordnenbaren Nutzerdaten an einem Schaltschrank (122.1, 122.2, 222.1, 222.2, 222.3, 322.1, 322.2).

12. Sicherheitsanordnung (102, 302) nach einem der vorherigen Ansprüche, wobei der Sperrbereich ein dynamisch bestimmter Bereich ist, der abhängig von den jeweiligen Anlagenzuständen der Schaltschränke bestimmt wird.

13. Umspannstation (120, 320), umfassend eine Sicherheitsanordnung (102, 302) nach einem der vorherigen Ansprüche.

14. Sicherheitssystem (100, 300), umfassend:
- mindestens eine Umspannstation (120, 320), und
- mindestens eine entfernt von der Umspannstation (120, 320) angeordnete Rechenvorrichtung (104, 304), und
- eine zumindest teilweise in der Rechenvorrichtung (104, 304) implementierte Sicherheitsanordnung (102, 302) nach einem der vorherigen Ansprüche 1 bis 12.

15. Verfahren zum Betreiben einer Sicherheitsanordnung (102, 302), insbesondere einer Sicherheitsanordnung (102, 302) nach einem der vorherigen Ansprüche 1 bis 12, umfassend:
- Erfassen einer Mehrzahl von elektrischen Zustandsparametern eines ersten Schaltschranks (122.1, 122.2, 222.1, 222.2, 222.3, 322.1, 322.2) und zum Erfassen einer Mehrzahl von elektrischen Zustandsparametern des mindestens einen weiteren Schaltschranks (122.1, 122.2, 222.1, 222.2, 222.3, 322.1, 322.2),
- Bestimmen des jeweiligen elektrischen Anlagenzustands der zumindest zwei Schaltschränke (122.1, 122.2, 222.1, 222.2, 222.3, 322.1, 322.2), basierend auf der jeweils erfassten Mehrzahl von elektrischen Zustandsparametern, und
- Ansteuern mindestens einer elektrischen Anzeigeneinrichtung (118, 218.1, 218.2, 218.3, 218.4, 318), derart, dass der bestimmte Anlagenzustand des ersten Schaltschranks (122.1, 122.2, 222.1, 222.2, 222.3, 322.1, 322.2) an dem ersten Schaltschrank (122.1, 122.2, 222.1, 222.2, 222.3, 322.1, 322.2) angezeigt wird und der bestimmte Anlagenzustand des weiteren Schaltschranks (122.1, 122.2, 222.1, 222.2, 222.3, 322.1, 322.2) an dem weiteren Schaltschrank (122.1, 122.2, 222.1, 222.2, 222.3, 322.1, 322.2) angezeigt wird, wobei die Mehrzahl von elektrischen Zustandsparametern eines Schaltschranks (122.1, 122.2, 222.1, 222.2, 222.3, 322.1, 322.2) folgende elektrische Parameter umfasst:
- einen Schaltzustand eines ersten elektrischen Schaltermoduls (250) einer ersten Sammelschiene des Schaltschranks (122.1, 122.2, 222.1, 222.2, 222.3, 322.1, 322.2),
- einen Schaltzustand eines weiteren elektrischen Schaltermoduls (252) einer weiteren Sammelschiene des Schaltschranks (122.1, 122.2, 222.1, 222.2, 222.3, 322.1, 322.2),
- einen Schaltzustand eines Erdungsschalters (254) des Schaltschranks (122.1, 122.2, 222.1, 222.2, 222.3, 322.1, 322.2),
- einen Sensorzustand eines Zustandssensors, eingerichtet zum Erfassen eines zwischen zwei Kontakten eingefügten Trenners, und
- einen Netzzustandsparameter eines an einen Schaltschrank (122.1, 122.2, 222.1, 222.2, 222.3, 322.1, 322.2) gekoppelten eklektischen Netzes (364.1, 364.2),
- wobei die Sicherheitsanordnung (102, 302) mindestens eine Nutzerpositionsbestimmungseinrichtung (372) umfasst, eingerichtet zum Bestimmen einer Position eines Nutzers in der Umspannstation (102, 302),
- wobei die Sicherheitsanordnung (102, 302) mindestens eine akustische, optische und/oder haptische Warnmeldeeinrichtung (362.1, 362.2) umfasst, eingerichtet zum Generieren einer Warnung bei Detektion, dass der Nutzer sich in einem Sperrbereich der Umspannstation befindet,
- und wobei die Warnmeldeeinrichtung (362.1, 362.2) ein in dem Boden (241, 341) angeordnetes Vibrationsmodul umfasst.

## Claims

1. Safety arrangement (102, 302) for at least two switch cabinets (122.1, 122.2, 222.1, 222.2, 222.3, 322.1, 322.2) of a converter station (120, 320), comprising:
- at least one detection equipment (106, 306) configured to detect a plurality of electrical state parameters of a first switch cabinet (122.1, 122.2, 222.1, 222.2, 222.3, 322.1, 322.2) and to detect a plurality of electrical state parameters of the at least one further switch cabinet (122.1, 122.2, 222.1, 222.2, 222.3, 322.1, 322.2),
- at least one evaluation equipment (108, 309) configured at least to determine the respective electrical system state of the at least two switch cabinets (122.1, 122.2, 222.1, 222.2, 222.3, 322.1, 322.2) based on the respective plurality of electrical state parameters detected, and
- at least one control equipment (110, 310) configured to control at least one electrical display equipment (118, 218.1, 218.2, 218.3, 218.4, 318) in such a way that the determined system state of the first switch cabinet (122.1, 122.2, 222.1, 222.2, 222.3, 322.1, 322.2) is displayed on the first switch cabinet (122.1, 122.2, 222.1, 222.2, 222.3, 322.1, 322.2) and the determined system state of the further switch cabinet (122.1, 122.2, 222.1, 222.2, 222.3, 322.1, 322.2) is displayed on the further switch cabinet (122.1, 122.2, 222.1, 222.2, 222.3, 322.1, 322.2), wherein the plurality of electrical state parameters of a switch cabinet (122.1, 122.2, 222.1, 222.2, 222.3, 322.1, 322.2) comprises the following electrical parameters:
- a switching state of a first electrical switch module (250) of a first busbar of the switch cabinet (122.1, 122.2, 222.1, 222.2, 222.3, 322.1, 322.2),
- a switching state of a further electrical switch module (252) of a further busbar of the switch cabinet (122.1, 122.2, 222.1, 222.2, 222.3, 322.1, 322.2),
- a switching state of an earthing switch (254) of the switch cabinet (122.1, 122.2, 222.1, 222.2, 222.3, 322.1, 322.2),
- a sensor state of a state sensor configured to detect a disconnector inserted between two contacts, and
- a network state parameter of an electrical network (364.1, 364.2) coupled to a switch cabinet (122.1, 122.2, 222.1, 222.2, 222.3, 322.1, 322.2),
- wherein the safety arrangement (102, 302) comprises at least one user position determination equipment (372) configured to determine a position of a user in the converter station (102, 302),
- wherein the safety arrangement (102, 302) comprises at least one acoustic, optical, and/or haptic warning equipment (362.1, 362.2) configured to generate a warning upon a detection that the user is located in a restricted area of the converter station, and
- wherein the warning equipment (362.1, 362.2) comprises a vibration module arranged in the floor (241, 341).

2. Safety arrangement (102, 302) according to claim 1, wherein the electrical display equipment (118, 218.1, 218.2, 218.3, 218.4, 318) comprises at least one controllable LED strip (118, 218.1, 218.2, 318) arranged on a wall (231, 233, 235) of a switch cabinet (122.1, 122.2, 222.1, 222.2, 222.3, 322.1, 322.2).

3. Safety device (102, 302) according to claim 1, wherein the electrical display equipment (118, 218.1, 218.2, 218.3, 218.4, 318) comprises at least one controllable LED strip (118, 218.1, 218.2, 218.3, 218.4, 318) arranged on the floor (241, 341) in front of a switch cabinet (122.1, 122.2, 222.1, 222.2, 222.3, 322.1, 322.2).

4. Safety device (102, 302) according to one of the preceding claims, wherein the electrical display equipment (118, 218.1, 218.2, 218.3, 218.4, 318) comprises at least one controllable optical display (118, 218.1, 218.2, 218.3, 218.4, 318) arranged at least on a wall (231, 233, 235) of a switch cabinet (122.1, 122.2, 222.1, 222.2, 222.3, 322.1, 322.2) and/or on the floor (241, 341) in front of a switch cabinet (122.1, 122.2, 222.1, 222.2, 222.3, 322.1, 322.2).

5. Safety arrangement (102, 302) according to one of the preceding claims, wherein the electrical display equipment (118, 218.1, 218.2, 218.3, 218.4, 318) comprises at least one controllable projection module (118, 218.1, 218.2, 218.3, 218.4, 318) configured to project the determined system state onto a wall (231, 233, 235) of a switch cabinet (122.1, 122.2, 222.1, 222.2, 222.3, 322.1, 322.2) and/or on the floor (241, 341) in front of a switch cabinet (122.1, 122.2, 222.1, 222.2, 222.3, 322.1, 322.2).

6. Safety arrangement (102, 302) according to one of the previous claims, wherein a release condition data set is specified, and
- the evaluation equipment (108, 308) is configured to determine a release state of a switch cabinet (122.1, 122.2, 222.1, 222.2, 222.3, 322.1, 322.2) if all detected electrical state parameters of the switch cabinet (122.1, 122.2, 222.1, 222.2, 222.3, 322.1, 322.2) fulfill the specified release condition data set.

7. Safety arrangement (102, 302) according to one of the previous claims, wherein a release condition data set is specified, and
- the evaluation equipment (108, 308) is configured to determine an intermediate state of a switch cabinet (122.1, 122.2, 222.1, 222.2, 222.3, 322.1, 322.2) if at least one of the electrical state parameters of the switch cabinet (122.1, 122.2, 222.1, 222.2, 222.3, 322.1, 322.2) satisfies the specified release condition data set.

8. Safety arrangement (102, 302) according to one of the previous claims, wherein a release condition data set is specified, and
- the evaluation equipment (108, 308) is configured to determine a blocked state of a switch cabinet (122.1, 122.2, 222.1, 222.2, 222.3, 322.1, 322.2) if no state parameter of the electrical state parameters of the switch cabinet (122.1, 122.2, 222.1, 222.2, 222.3, 322.1, 322.2) satisfies the specified release condition data record.

9. Safety arrangement (102, 302) according to one of the previous claims, wherein the detection equipment (106, 306) is configured to detect a plurality of electrical state parameters of a first switch cabinet (122.1, 122.2, 222.1, 222.2, 222.3, 322.1, 322.2) and to detect a plurality of electrical state parameters of the at least one further switch cabinet (122.1, 122.2, 222.1, 222.2, 222.3, 322.1, 322.2),
- wherein the evaluation equipment (108, 308) is configured to determine, at least almost continuously, the respective electrical system state of the at least two switch cabinets (122.1, 122.2, 222.1, 222.2, 222.3, 322.1, 322.2) based on the respective plurality of electrical state parameters detected.

10. Safety arrangement (102, 302) according to one of the preceding claims, wherein the safety arrangement (102, 302) comprises at least one near-field receiver (360.1, 360.2, 360.3, 360.4) arranged in the converter station (120, 320), which is configured to receive at least one user data set sent by a mobile user device (374) containing at least one user ID of the user assigned to the mobile user device (374), and
- the safety arrangement (102, 302) comprises, in particular, at least one data storage unit (370) configured to store the at least one received user data set together with the time of receipt of the user data set.

11. Safety arrangement (102, 302) according to one of the preceding claims, wherein the display equipment (118, 218.1, 218.2, 218.3, 218.4, 318) is configured to display a processing state on a switch cabinet based on a received fault and/or maintenance information piece,
and/or
- the display equipment (118, 218.1, 218.2, 218.3, 218.4, 318) is configured to display received user data that can be assigned to a switch cabinet (122.1, 122.2, 222.1, 222.2, 222.3, 322.1, 322.2) at a switch cabinet (122.1, 122.2, 222.1, 222.2, 222.3, 322.1, 322.2).

12. Safety arrangement (102, 302) according to one of the previous claims, wherein the restricted area is a dynamically determined area that is determined depending on the respective system states of the switch cabinets.

13. Converter station (120, 320) comprising a safety arrangement (102, 302) according to one of the previous claims.

14. Safety system (100, 300) comprising:
- at least one converter station (120, 320), and
- at least one computing device (104, 304) located remotely from the converter station (120, 320), and
- a safety arrangement (102, 302) implemented at least partially in the computing device (104, 304) according to one of the preceding claims 1 to 12.

15. Method for operating a safety arrangement (102, 302), in particular, a safety arrangement (102, 302) according to one of the preceding claims 1 to 12, comprising:
- detecting a plurality of electrical state parameters of a first switch cabinet (122.1, 122.2, 222.1, 222.2, 222.3, 322.1, 322.2) and detecting a plurality of electrical state parameters of the at least one further switch cabinet (122.1, 122.2, 222.1, 222.2, 222.3, 322.1, 322.2),
- determining the respective electrical system state of the at least two switch cabinets (122.1, 122.2, 222.1, 222.2, 222.3, 322.1, 322.2) based on the respective detected plurality of electrical state parameters, and
- controlling at least one electrical display equipment (118, 218.1, 218.2, 218.3, 218.4, 318) in such a way that the determined system state of the first switch cabinet (122.1, 122.2, 222.1, 222.2, 222.3, 322.1, 322.2) is displayed on the first switch cabinet (122.1, 122.2, 222.1, 222.2, 222.3, 322.1, 322.2) and the specific system state of the further switch cabinet (122.1, 122.2, 222.1, 222.2, 222.3, 322.1, 322.2) is displayed on the further switch cabinet (122.1, 122.2, 222.1, 222.2, 222.3, 322.1, 322.2),
wherein the plurality of electrical state parameters of a switch cabinet (122.1, 122.2, 222.1, 222.2, 222.3, 322.1, 322.2) comprises the following electrical parameters:
- a switching state of a first electrical switch module (250) of a first busbar of the switch cabinet (122.1, 122.2, 222.1, 222.2, 222.3, 322.1, 322.2),
- a switching state of a further electrical switch module (252) of a further busbar of the switch cabinet (122.1, 122.2, 222.1, 222.2, 222.3, 322.1, 322.2),
- a switching state of an earthing switch (254) of the switch cabinet (122.1, 122.2, 222.1, 222.2, 222.3, 322.1, 322.2),
- a sensor state of a state sensor set up to detect a disconnector inserted between two contacts, and
- a network state parameter of an electrical network (364.1, 364.2) coupled to a switch cabinet (122.1, 122.2, 222.1, 222.2, 222.3, 322.1, 322.2),
- wherein the safety arrangement (102, 302) comprises at least one user position determination device (372) configured to determine a position of a user in the converter station (102, 302),
- wherein the Safety arrangement (102, 302) comprises at least one acoustic, optical, and/or haptic warning equipment (362.1, 362.2) configured to generate a warning upon a detection that the user is located in a restricted area of the converter station, and
- wherein the warning equipment (362.1, 362.2) comprises a vibration module arranged in the floor (241, 341).

## Revendications

1. Arrangement de sécurité (102, 302) pour au moins deux armoires électriques (122.1, 122.2, 222.1, 222.2, 222.3, 322.1, 322.2) d'une station de transformation (120, 320), comprenant :
- au moins un dispositif de détection (106, 306) configuré pour détecter une pluralité de paramètres d'état d'installation d'une première armoire électrique (122.1, 122.2, 222.1, 222.2, 222.3, 322.1, 322.2) et pour détecter une pluralité de paramètres d'état d'installation de l'au moins une autre armoire électrique (122.1, 122.2, 222.1, 222.2, 222.3, 322.1, 322.2),
- au moins un dispositif d'évaluation (108, 309) configuré au moins pour déterminer l'état d'installation respectif des au moins deux armoires électriques (122.1, 122.2, 222.1, 222.2, 222.3, 322.1, 322.2) basé sur la pluralité de paramètres d'état d'installation respectivement détectés, et
- au moins un dispositif de commande (110, 310) configuré pour commander au moins un dispositif d'affichage électrique (118, 218.1, 218.2, 218.3, 218.4, 318) de telle sorte que l'état d'installation déterminé de la première armoire électrique (122.1, 122.2, 222.1, 222.2, 222.3, 322.1, 322.2) est affiché sur la première armoire électrique (122.1, 122.2, 222.1, 222.2, 222.3, 322.1, 322.2) et l'état déterminé de l'installation de l'autre armoire électrique (122.1, 122.2, 222.1, 222.2, 222.3, 322.1, 322.2) est affiché sur l'autre armoire électrique (122.1, 122.2, 222.1, 222.2, 222.3, 322.1, 322.2),
où, la pluralité de paramètres d'état d'installation d'une armoire électrique (122.1, 122.2, 222.1, 222.2, 222.3, 322.1, 322.2) comprend des paramètres électriques suivants :
- un état de commutation d'un premier module de commutation électrique (250) d'une première barre omnibus de l'armoire électrique (122.1, 122.2, 222.1, 222.2, 222.3, 322.1, 322.2),
- un état de commutation d'un autre module de commutation électrique (252) d'une autre barre omnibus de l'armoire électrique (122.1, 122.2, 222.1, 222.2, 222.3, 322.1, 322.2),
- un état de commutation d'un interrupteur de mise à la terre (254) de l'armoire électrique (122.1, 122.2, 222.1, 222.2, 222.3, 322.1, 322.2),
- un état de capteur d'un capteur d'état, configuré pour détecter un interrupteur inséré entre deux contacts, et
- un paramètre d'état de réseau d'un réseau électrique (364.1, 364.2) couplé à une armoire électrique (122.1, 122.2, 222.1, 222.2, 222.3, 322.1, 322.2),
- où le dispositif de sécurité (102, 302) comprend au moins un dispositif de détermination de position d'utilisateur (372) configuré pour déterminer une position d'un utilisateur dans la station de transformation (102, 302),
- où le dispositif de sécurité (102, 302) comprend au moins un dispositif d'alerte acoustique, optique et/ou haptique (362.1, 362.2) configuré pour générer une alerte lorsqu'une détection que l'utilisateur se trouve dans une zone interdite de la station de transformation, et
- où le dispositif d'alarme (362.1, 362.2) comprend un module vibrant disposé dans le sol (241, 341).

2. Arrangement de sécurité (102, 302) selon la revendication 1, où le dispositif d'affichage électrique (118, 218.1, 218.2, 218.3, 218.4, 318) comprend au moins une bande LED commandable (118, 218.1, 218.2, 318) disposée sur une paroi (231, 233, 235) d'une armoire électrique (122.1, 122.2, 222.1, 222.2, 222.3, 322.1, 322.2).

3. Arrangement de sécurité (102, 302) selon la revendication 1, où le dispositif d'affichage électrique (118, 218.1, 218.2, 218.3, 218.4, 318) comprend au moins une bande LED commandable (118, 218.1, 218.2, 218.3, 218.4, 318) disposée sur le sol (241, 341) devant une armoire électrique (122.1, 122.2, 222.1, 222.2, 222.3, 322.1, 322.2).

4. Arrangement de sécurité (102, 302) selon l'une des revendications précédentes, où le dispositif d'affichage électrique (118, 218.1, 218.2, 218.3, 218.4, 318) comprend au moins un écran optique (118, 218.1, 218.2, 218.3, 218.4, 318) disposé au moins sur une paroi (231, 233, 235) d'une armoire électrique (122.1, 122.2, 222.1, 222.2, 222.3, 322.1, 322.2) et/ou sur le sol (241, 341) devant une armoire électrique (122.1, 122.2, 222.1, 222.2, 222.3, 322.1, 322.2).

5. Arrangement de sécurité (102, 302) selon l'une des revendications précédentes, où le dispositif d'affichage électrique (118, 218.1, 218.2, 218.3, 218.4, 318) comprend au moins un module de projection commandable (118, 218.1, 218.2, 218.3, 218.4, 318), configuré pour projeter l'état déterminé d'installation sur une paroi (231, 233, 235) d'une armoire électrique (122.1, 122.2, 222.1, 222.2, 222.3, 322.1, 322.2) et/ou sur le sol (241, 341) devant une armoire électrique (122.1, 122.2, 222.1, 222.2, 222.3, 322.1, 322.2).

6. Arrangement de sécurité (102, 302) selon l'une des revendications précédentes, où un ensemble de données de conditions de validation est prédéfini, et
- le dispositif d'évaluation (108, 308) est configuré pour déterminer un état de validation d'une armoire électrique (122.1, 122.2, 222.1, 222.2, 222.3, 322.1, 322.2) lorsque tous les paramètres d'état d'installation enregistrés de l'armoire électrique (122.1, 122.2, 222.1, 222.2, 222.3, 322.1, 322.2) satisfont à l'ensemble de données de conditions de validation prédéfini.

7. Arrangement de sécurité (102, 302) selon l'une des revendications précédentes, où un ensemble de données de conditions de validation est prédéfini, et
- le dispositif d'évaluation (108, 308) est configuré pour déterminer un état intermédiaire d'une armoire électrique (122.1, 122.2, 222.1, 222.2, 222.3, 322.1, 322.2) lorsqu'au moins l'un des paramètres d'état d'installation de l'armoire électrique (122.1, 122.2, 222.1, 222.2, 222.3, 322.1, 322.2) satisfait à l'ensemble de données de conditions de validation prédéfini.

8. Arrangement de sécurité (102, 302) selon l'une des revendications précédentes, où un ensemble de données de conditions de validation est prédéfini, et
- le dispositif d'évaluation (108, 308) est configuré pour déterminer un état de blocage d'une armoire électrique (122.1, 122.2, 222.1, 222.2, 222.3, 322.1, 322.2) lorsqu'aucun paramètre d'état des paramètres d'état d'installation de l'armoire électrique (122.1, 122.2, 222.1, 222.2, 222.3, 322.1, 322.2) ne satisfait à l'ensemble de données de conditions de validation prédéfini.

9. Arrangement de sécurité (102, 302) selon l'une des revendications précédentes, dans lequel le dispositif de détection (106, 306) est configuré pour détecter au moins de manière quasi continue une pluralité de paramètres état d'installation d'une première armoire électrique (122.1, 122.2, 222.1, 222.2, 222.3, 322.1, 322.2) et pour détecter une pluralité de paramètres d'état d'installation de l'au moins une autre armoire électrique (122.1, 122.2, 222.1, 222.2, 222.3, 322.1, 322.2),
- le dispositif d'évaluation (108, 308) est configuré pour déterminer au moins de manière quasi continue l'état d'installation respectif des au moins deux armoires électriques (122.1, 122.2, 222.1, 222.2, 222.3, 322.1, 322.2), sur la base de la pluralité de paramètres d'état d'installation respectivement enregistrés.

10. Arrangement de sécurité (102, 302) selon l'une des revendications précédentes, le dispositif de sécurité (102, 302) comprenant au moins un récepteur de champ proche (360.1, 360.2, 360.3, 360.4) disposé dans la station de transformation (120, 320), configuré pour recevoir au moins un ensemble de données utilisateur émis par un appareil utilisateur mobile (374), contenant au moins un identifiant utilisateur de l'utilisateur associé à l'appareil utilisateur mobile (374),
et
- le dispositif de sécurité (102, 302) comprend en particulier au moins une mémoire de données (370) configurée pour stocker au moins un ensemble de données utilisateur reçu avec l'heure de réception de l'ensemble de données utilisateur.

11. Arrangement de sécurité (102, 302) selon l'une des revendications précédentes, où le dispositif d'affichage (118, 218.1, 218.2, 218.3, 218.4, 318) est configuré pour afficher un état de traitement sur une armoire électrique, basé sur d'informations de défaut et/ou d'informations de maintenance reçues,
et/ou
- le dispositif d'affichage (118, 218.1, 218.2, 218.3, 218.4, 318) est configuré pour afficher des données utilisateur reçues et attribuables à une armoire électrique (122.1, 122.2, 222.1, 222.2, 222.3, 322.1, 322.2).

12. Arrangement de sécurité (102, 302) selon l'une des revendications précédentes, où la zone de blocage est une zone déterminée de manière dynamique en fonction des états respectifs des armoires électriques.

13. Station de transformation (120, 320) comprenant un arrangement de sécurité (102, 302) selon l'une des revendications précédentes.

14. Système de sécurité (100, 300) comprenant:
- au moins une station de transformation (120, 320), et
- au moins un dispositif de calcul (104, 304) disposé à distance de la station de transformation (120, 320), et
- un dispositif de sécurité (102, 302) implémenté au moins en partie dans le dispositif de calcul (104, 304) selon l'une des revendications 1 à 12 précédentes.

15. Méthode pour exploiter un dispositif de sécurité (102, 302), en particulier un dispositif de sécurité (102, 302) selon l'une des revendications 1 à 12 précédentes, comprenant :
- saisir une pluralité de paramètres d'état d'installation d'une première armoire électrique (122.1, 122.2, 222.1, 222.2, 222.3, 322.1, 322.2) et pour détecter une pluralité de paramètres d'état électriques de l'au moins une autre armoire électrique (122.1, 122.2, 222.1, 222.2, 222.3, 322.1, 322.2),
- déterminer l'état d'installation respectif des au moins deux armoires électriques (122.1, 122.2, 222.1, 222.2, 222.3, 322.1, 322.2) basé sur la pluralité de paramètres d'état électriques respectifs détectés, et
- commander au moins un dispositif d'affichage électrique (118, 218.1, 218.2, 218.3, 218.4, 318) de telle sorte que l'état d'installation déterminé de la première armoire électrique (122.1, 122.2, 222.1, 222.2, 222.3, 322.1, 322.2) est affiché sur la première armoire électrique (122.1, 122.2, 222.1, 222.2, 222.3, 322.1, 322.2) et l'état d'installation déterminé de l'autre armoire électrique (122.1, 122.2, 222.1, 222.2, 222.3, 322.1, 322.2) est affiché sur l'autre armoire électrique (122.1, 122.2, 222.1, 222.2, 222.3, 322.1, 322.2),
où la pluralité de paramètres d'état d'installation d'une armoire électrique (122.1, 122.2, 222.1, 222.2, 222.3, 322.1, 322.2) comprend les paramètres électriques suivants :
- un état de commutation d'un premier module de commutation électrique (250) d'une première barre omnibus de l'armoire électrique (122.1, 122.2, 222.1, 222.2, 222.3, 322.1, 322.2),
- un état de commutation d'un autre module de commutation électrique (252) d'une autre barre omnibus de l'armoire électrique (122.1, 122.2, 222.1, 222.2, 222.3, 322.1, 322.2),
- un état de commutation d'un interrupteur de mise à la terre (254) de l'armoire électrique (122.1, 122.2, 222.1, 222.2, 222.3, 322.1, 322.2),
- un état de capteur d'un capteur d'état, configuré pour détecter un interrupteur inséré entre deux contacts, et
- un paramètre d'état du réseau d'un réseau électrique (364.1, 364.2) couplé à une armoire électrique (122.1, 122.2, 222.1, 222.2, 222.3, 322.1, 322.2),
- où le dispositif de sécurité (102, 302) comprend au moins un dispositif de détermination de position d'utilisateur (372) configuré pour déterminer la position d'un utilisateur dans la station de transformation (102, 302),
- où le dispositif de sécurité (102, 302) comprend au moins un dispositif d'alerte acoustique, optique et/ou haptique (362.1, 362.2) configuré pour générer une alerte lorsqu'il détecte que l'utilisateur se trouve dans une zone interdite de la station de transformation, et
- où le dispositif d'alarme (362.1, 362.2) comprend un module vibrant disposé dans le sol (241, 341).
